# EUROPEAN PATENT APPLICATION

(11) **EP 4 819 634 A2**
(43) Date of publication of application: **07.10.2026**
(21) Application number: 26157225.9
(22) Date of filing: 09.02.2026
(51) Int. Cl.: H04N 25/626, H04N 25/673, H04N 25/779

(54) **IMAGING DEVICE AND OPERATING METHOD THEREOF**

(30) Priority: 31.03.2025 KR 20250040936
(71) Applicant: SK hynix Inc., Bubal-eub Icheon-si Gyeonggi-do 17336 (KR)
(72) Inventor: KEUM, Ga Young, 17336 Icheon-si, Gyeonggi-do (KR); LEE, Eun Khwang, 17336 Icheon-si, Gyeonggi-do (KR)
(74) Representative: Isarpatent

(57) **Abstract**

Imaging devices and their operating methods are disclosed. In an embodiment, an imaging device includes: a pixel array including a plurality of pixels, each pixel configured to convert incident light into photocharge and including a transmission transistor configured to transmit the photocharge; a row driver electrically coupled to the pixel array and configured to supply a control signal to the plurality of pixels; and a compensation driver electrically coupled to the pixel array and configured to supply a compensation signal to the plurality of pixels, wherein the compensation signal is configured to adjust, at each coordinate of the pixel array, an effective gate voltage of the transmission transistor.

## Description

### TECHNICAL FIELD

The disclosed technology relates to an imaging device, and a method for operating the imaging device.

### BACKGROUND

With the development of information and communication technologies and the digitalization of image information, electrical devices, such as digital cameras, camcorders, mobile phones, personal communication systems (PCSs), game machines, security cameras, and medical micro cameras, are now equipped with image sensors offering improved performance. In general, an image sensor may include a pixel region that includes a photodiode and a peripheral circuit region. A unit pixel may include a photodiode and a transmission transistor. The transmission transistor disposed between the photodiode and a floating diffusion region may transfer charges generated by the photodiode to the floating diffusion region.

### SUMMARY

Embodiments of the disclosed technology provide an imaging device designed to provide an optimal voltage to the transmission transistor, and a method for operating the imaging device.

Embodiments of the disclosed technology provide an imaging device designed to provide an optimal voltage to a boosting control line, and a method for operating the imaging device.

Embodiments of the disclosed technology is to provide an imaging device capable of securing an optimal driving time (or an optimal duration) of a control signal applied to a gate electrode of the transmission transistor, and a method for operating the imaging device.

Embodiments of the disclosed technology is to provide an imaging device designed to ensure an optimal driving time (or an optimal duration) for a control signal applied to a boosting control line, and a method for operating the imaging device.

The technical advantages of the embodiments of the disclosed technology are not limited to those mentioned above, and may include additional technical advantages as set forth in the detailed description below.

In an embodiment, an imaging device may include: a pixel array including a plurality of pixels, each pixel configured to convert incident light into photocharge and including a transmission transistor configured to transmit the photocharge; a row driver electrically coupled to the pixel array and configured to supply a control signal to the plurality of pixels; and a compensation driver electrically coupled to the pixel array and configured to supply a compensation signal to the plurality of pixels, wherein the compensation signal is configured to adjust, at each coordinate of the pixel array, an effective gate signal of the transmission transistor.

In an embodiment, the control signal may have a first voltage and/or a first duration. The compensation signal may have a second voltage and/or a second duration. The effective gate signal may have an effective gate voltage and/or an effective signal duration.

In another embodiment, a method for operating an imaging device may include: evaluating an optimal voltage value of a control signal of each of a plurality of pixels and storing the optimal voltage value in a data memory; outputting the control signal from a row driver; outputting a compensation signal for each of the plurality of pixels on a column basis; and applying the control signal and the compensation signal to each of the plurality of pixels.

In another embodiment, a method for operating an imaging device may include: evaluating an optimal duration of a control signal of each of a plurality of pixels and storing the optimal duration in a data memory; outputting the control signal from a row driver; outputting a compensation signal corresponding to the optimal duration for each of the plurality of pixels on a column basis; and applying the control signal and the compensation signal to each of the plurality of pixels.

Additional details of some embodiments are provided in the detailed description and the accompanying drawings.

In some embodiments, an imaging device includes a row driver configured to supply a control signal to a plurality of pixels; and a compensation driver configured to supply a compensation signal to the plurality of pixels. Both the control signal and the compensation signal may be applied to a gate electrode of the transmission transistor. In this way, an optimal voltage may be provided to the transmission transistor.

In some embodiments, an imaging device includes a row driver configured to supply a control signal to a plurality of pixels; and a compensation driver configured to supply a compensation signal to the plurality of pixels. The control signal and the compensation signal may be provided to the boosting control line and the compensation line, respectively. Each of the boosting control line and the compensation line may form a capacitance with the floating diffusion electrode (or a floating diffusion region). In this way, an optimal voltage may be provided to the boosting control line (or the floating diffusion electrode).

In some embodiments, an imaging device includes a row driver configured to supply a control signal of a first duration to the plurality of pixels; and a compensation driver configured to supply a compensation signal of a second duration to the plurality of pixels . Both the control signal and the compensation signal may be applied to a gate electrode of the transmission transistor. In this way, the transmission transistor may operate for the optimal driving time (or the optimal duration).

In some embodiments, an imaging device includes a row driver configured to supply a control signal of a first duration to the plurality of pixels; and a compensation driver configured to supply a compensation signal of a second duration to the plurality of pixels. The control signal and the compensation signal may be provided to the boosting control line and the compensation line, respectively. Each of the boosting control line and the compensation line may form a capacitance with the floating diffusion electrode (or a floating diffusion region). In this way, the boosting control line may operate for the optimal driving time (or the optimal duration).

### BRIEF DESCRIPTION OF THE DRAWINGS

FIG. 1 is a block diagram illustrating an imaging system based on an embodiment.
FIG. 2 is a block diagram illustrating an image sensing unit based on an embodiment.
FIG. 3 is a circuit diagram of a pixel of a pixel array based on an embodiment.
FIG. 4 is a schematic view illustrating the application of an optimal voltage to a transmission transistor of a pixel based on an embodiment.
FIG. 5 is a timing diagram of a pixel based on an embodiment.
FIG. 6 is a diagram illustrating storing image data output from one pixel based on an embodiment.
FIG. 7 is a flow diagram illustrating a method for operating an imaging device based on an embodiment.
FIG. 8 is a circuit diagram of a pixel array based on another embodiment.
FIG. 9 is a flow diagram illustrating a method for operating an imaging device based on another embodiment.
FIG. 10 is a timing diagram illustrating an operation of a transmission transistor of a pixel based on another embodiment in an optimal driving time.
FIG. 11 is a timing diagram illustrating an operation of a transmission transistor of a pixel based on another embodiment in an optimal driving time.
FIG. 12 is a timing diagram illustrating an operation of a transmission transistor of a pixel based on another embodiment in an optimal driving time.
FIG. 13 is a block diagram illustrating an image sensing unit based on another embodiment.
FIG. 14 is a circuit diagram of a pixel array based on another embodiment.
FIG. 15 is a schematic cross-sectional view illustrating a floating diffusion electrode, a boosting control line and a compensation line of an image sensing unit of FIG. 14.
FIG. 16 is a timing diagram of one pixel.
FIG. 17 is a flow diagram illustrating a method for operating an imaging device based on another embodiment.
FIG. 18 is a flow diagram illustrating a method for operating an imaging device based on another embodiment.
FIG. 19 is a timing diagram illustrating an operation of a boosting control line of a pixel based on another embodiment in an optimal driving time.
FIG. 20 is a timing diagram illustrating an operation of a boosting control line of a pixel based on another embodiment in an optimal driving time.

### DETAILED DESCRIPTION

Hereinafter, some embodiments of the disclosed technology will be described with reference to the accompanying drawings.

It should be understood terms such as "first" and "second" are used herein to distinguish between different components and do not imply any particular order or hierarchy. For example, a "first" component may be referred to as a "second" component and vice versa. Additionally, singular forms may include the plural unless the context indicates otherwise.

In the present description, the control signal may have a first voltage and/or a first duration. The compensation signal may have a second voltage and/or a second duration. The effective gate signal may have an effective gate voltage and/or an effective signal duration.

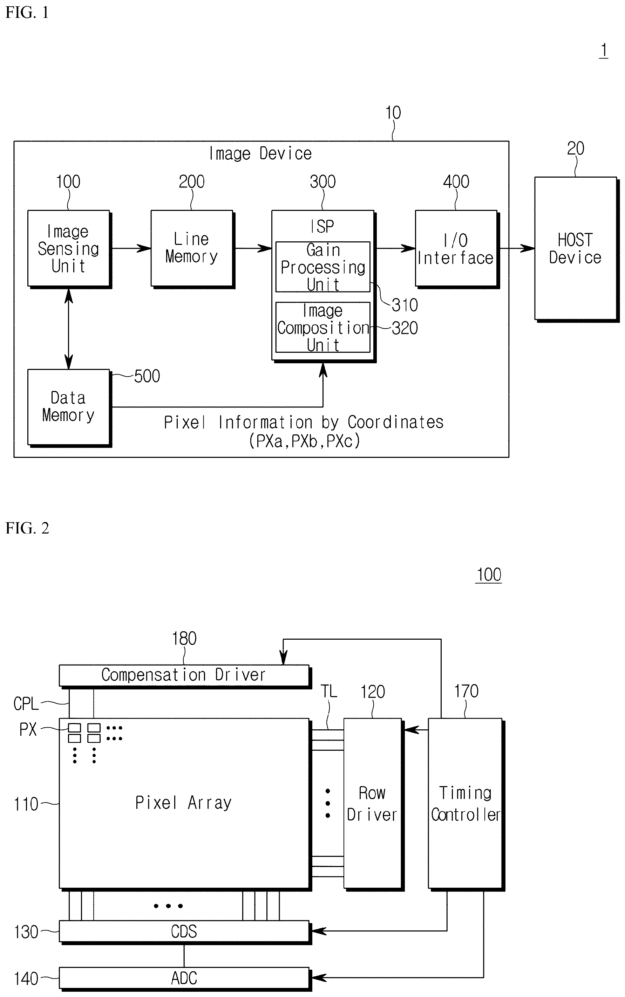

FIG. 1 is a block diagram illustrating an imaging system based on an embodiment.

Referring to FIG. 1, the imaging system 1 may refer to not only a device, for example, a digital still camera for photographing still images or a digital video camera for photographing moving images, but also a device for detecting a motion.

The imaging system 1 may include an imaging device 10 and a host device 20.

The imaging device 10 may include an image sensing unit 100, a line memory 200, an ISP (image signal processor) 300, an I/O interface 400, and a data memory 500.

The image sensing unit 100 may be a complementary metal oxide semiconductor image sensor (CIS) configured to convert an optical signal into an electric signal. The overall operations such as power control (e.g., power on/off), operation modes, operation timings, sensitivity of the image sensing unit 100 may be controlled by the ISP 300. The image sensing unit 100 may transmit image data obtained by converting the optical signal into the electric signal to the line memory 200 based on the control of the ISP 300.

The line memory 200 may include a volatile memory (e.g., DRAM, SRAM, etc.) and/or a non-volatile memory (e.g., a flash memory).

The line memory 200 may receive image data from the image sensing unit 100, may store the received image data, and may transmit the stored image data to the ISP 300 based on the control of the ISP 300.

The ISP 300 may perform image processing of the image data stored in the line memory 200. The ISP 300 may reduce noise of image data, and may perform image signal processing such as gamma correction, color filter array interpolation, color matrix, color correction, color enhancement, lens distortion correction for image-quality improvement.

In order to generate the HDR image, the ISP 300 may include a gain processing unit 310, and an image compositing unit 320.

The gain processing unit 310 may determine a gain to be applied (e.g., multiplied) to image data. The gain processing unit 310 may determine a gain based on a difference in the conversion gain between the HCG (high conversion gain) mode and LCG (low conversion gain) mode, and provide the determined gain to the image compositing unit 320.

The image compositing unit 320 may synthesize HDR image corresponding to a high dynamic range by using the image data of the pixel operating in the HCG mode and/or the image data of the pixel operating in the LCG mode.

The ISP 300 may transmit image data (e.g., HDR image) obtained through such image signal processing to the I/O interface 400.

The I/O interface 400 may perform communication with the host device 20, and may transmit image data obtained through the image signal processing to the host device 20.

The host device 20 may be a processor configured to process the image data obtained through the image signal processing and received from the imaging device 10 (e.g., an application processor), a memory configured to store image data (e.g., a non-volatile memory), or a display device configured to visually output image data (e.g., a liquid crystal display (LCD)).

The data memory 500 may store image data Data_PX in a digital format which is converted by an analog-to-digital converter 140.

FIG. 2 is a block diagram illustrating the image sensing unit based on an embodiment.

The image sensing unit 100 based on an embodiment may include a pixel array 110, a timing controller 170, a correlate double sampler (CDS) 130, and an analog-digital converter (ADC) 140.

Referring to FIG. 2, the pixel array 110 may include a plurality of pixels PX. The pixels PX may be arranged in a matrix pattern along a row direction and a column direction, but the disclosed technology is not limited thereto. The pixels PX may include a red pixel, a green pixel, and a blue pixel, however the embodiments of the disclosed technology are not limited thereto, and the pixels PX may further include a white pixel or an infrared light pixel.

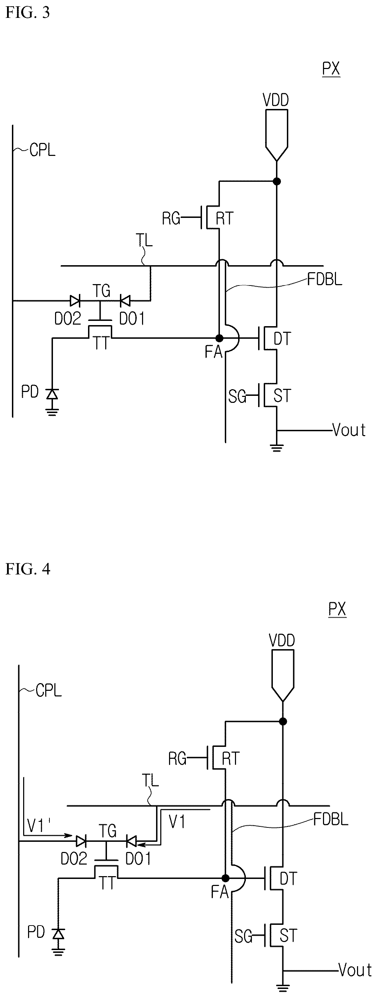

The plurality of pixels PX may be electrically connected to a row driver 120. Each of the plurality of pixels PX may be electrically connected to control lines extending from the row driver 120, respectively. The control line may be a transmission signal line TL, or a boosting control line illustrated in FIG. 3. In an embodiment, the control line as a transmission signal line TL will be described.

The row driver 120 may activate the pixel array 110 to perform certain operations on the pixels included in the corresponding row based on commands and control signals provided by the timing controller 170.

The CDS 130 may transfer the reference signal and the image signal of each of the columns as a correlate double sampling signal to the ADC 140 based on control signals from the timing controller 170.

The ADC 140 may convert the correlate double sampling signal output from the CDS 130 with respect to each column into digital signals, and output the image data. In an embodiment, the ADC 140 may convert the correlate double sampling signal generated by the CDS 130 for each of columns into digital signals, and output the digital signals.

The timing controller 170 may control at least one among the row driver 120, the CDS 130, and the ADC 140.

The image sensing unit 100 based on an embodiment may further include a compensation driver 180. The compensation driver 180 may be controlled by the timing controller 170. One or more compensation lines CPL may extend from the compensation driver 180 to the pixel array 110. Each compensation line CPL may be provided to extend along a column direction of a column of pixels of the pixel array 110, and the plurality of compensation lines CPL may be spaced apart in a row direction. Each of the plurality of compensation lines CPL may correspond one-to-one with each of the pixel columns formed by the plurality of pixels extending in the column direction. The compensation lines CPL may serve to compensate for a transmission control signal supplied from the transmission signal line TL.

FIG. 3 is a circuit diagram of the pixel of the pixel array based on an embodiment.

Referring to FIG. 3, the circuit diagram of the pixel may correspond to an equivalent circuit of each pixel PX included in the pixel array (e.g., 110 in FIG. 2).

The pixel PX may include a photodetector PD, a transmission transistor TT, a reset transistor RT, a floating diffusion region FA, a driver transistor DT, and a selection transistor ST. That is, the pixel PX may have a 4TR (4-transistor) structure.

The photodetector PD may generate and accumulate photocharge corresponding to the intensity of incident light. For example, the photodetector PD may be implemented with a photo diode, a photo transistor, a photo gate, a pinned type photo diode or a combination thereof.

The transmission transistor TT may be electrically connected between the photodetector PD and the floating diffusion region FA. The transmission transistor TT may be turned on or turned off in response to a transmission control signal TX applied to a gate electrode TG. The transmission transistor TT may be turned on to transfer the photocharge accumulated in the photodetector PD to the floating diffusion region FA. A source electrode of the transmission transistor TT may be electrically connected to the photodetector PD, and a drain electrode thereof may be electrically connected to the floating diffusion region FA.

The reset transistor RT may reset a voltage of the floating diffusion region FA to a power supply voltage VDD in response to a reset control signal RX applied to the gate electrode RG. The power supply voltage VDD may be applied to a source electrode of the reset transistor RT and a drain electrode of the reset transistor RT may be electrically connected to the floating diffusion region FA.

The floating diffusion region FA may accumulate the photocharge transferred from the transmission transistor TT. The floating diffusion region FA may be electrically connected to a gate electrode of the driver transistor DT, the drain electrode of the transmission transistor TT, and the drain electrode of the reset transistor RT. A floating diffusion electrode may be disposed in the floating diffusion region FA.

The driver transistor DT may be electrically connected between the power supply voltage VDD and the selection transistor ST, and may amplify a change in an electric potential in the floating diffusion region FA to which the photocharge accumulated in the photodetector PD is transferred, and may transfer the amplified potential change to the selection transistor ST. The gate electrode of the driver transistor DT may be electrically connected to the floating diffusion region FA, the power supply voltage VDD may be applied to the source electrode thereof, and the drain electrode thereof may be electrically connected to the source electrode of the selection transistor ST.

The selection transistor ST may be electrically connected between the driver transistor DT and an output signal line (or a column line), may be turned on in response to a row selection control signal SX applied to the gate electrode SG, and may output an electric signal transferred from the driver transistor DT as a pixel signal Vout. The source electrode of the selection transistor ST may be electrically connected to the drain electrode of the driver transistor DT.

The floating diffusion region FA (or the floating diffusion electrode) may form a capacitance with a boosting control line FDBL.

Each of the transmission control signal TX, the reset control signal RX, the row selection control signal SX, and a control signal provided to the boosting control line FDBL may be supplied from the row driver 120, but the disclosed technology is not limited thereto.

The pixel array 110 based on an embodiment may further include a compensation line CPL that is electrically connected to the gate electrode TG of the transmission transistor TT of each pixel. The compensation line CPL may provide a compensation signal to the gate electrode TG of the transmission transistor TT. The compensation signal may be a compensation signal with respect to the transmission control signal.

In some embodiments, the pixel PX may further include a first diode OD1 between the transmission signal line TL and the gate electrode TG and a second diode OD2 between the compensation line CPL and the gate electrode TG. The first diode OD1 and the second diode OD2 may be selectively turned on. The embodiments of the present embodiment are not limited thereto, and may make a switch which can be turned on or turned off through an additional control signal without using the diodes OD1 and OD2.

FIG. 4 is a schematic view illustrating the application of an optimal voltage to the transmission transistor of the pixel based on an embodiment.

Referring to FIG. 4, a transmission control signal (also referred to as a first voltage V1) may be applied to a terminal of the first diode OD1 through the transmission signal line TL, and the compensation signal (also referred to as a supplementary first voltage V1') may be applied to a terminal of the second diode OD2 through the compensation line CPL. In some embodiments, the supplementary first voltage V1' is applied to the gate electrode TG of the transmission transistor TT via the compensation line CPL, in addition to the first voltage V1 applied via the transmission signal line TL, enabling pixel-level voltage optimization. In some embodiments, the first voltage V1 may be determined based on the average characteristics of all pixels within a specific region, such as a row. It may be applied uniformly to all pixels in that region via a transmission line. In some embodiments, the supplementary first voltage V1' may be determined based on the individual characteristics of each pixel. It may be applied per pixel through the compensation line CPL to adjust the effective gate voltage of the transmission transistor, compensating for pixel-to-pixel variation. For example, the first voltage V1 may be the lowest voltage value among the optimal voltage values for the pixels (or the lowest voltage value among the optimal voltage values for the pixels PX in each pixel row, or an average optimal voltage value for the pixels PX per pixel row). For example, the supplementary first voltage V1' may be the optimal voltage value of the pixels PX at each coordinate. The supplementary first voltage V1' which is the optimal voltage value may be different, or the same per individual pixel PX. A method for determining the supplementary first voltage V1' will be described below. In the context of this patent document, the words "optimized" or "optimal" that are used in conjunction with the transmission control signal are used to indicate values or conditions that provide a better performance for the image sensor device. In this sense, the words "optimized" or "optimal" may not always convey the best possible performance achievable by the image sensor device.

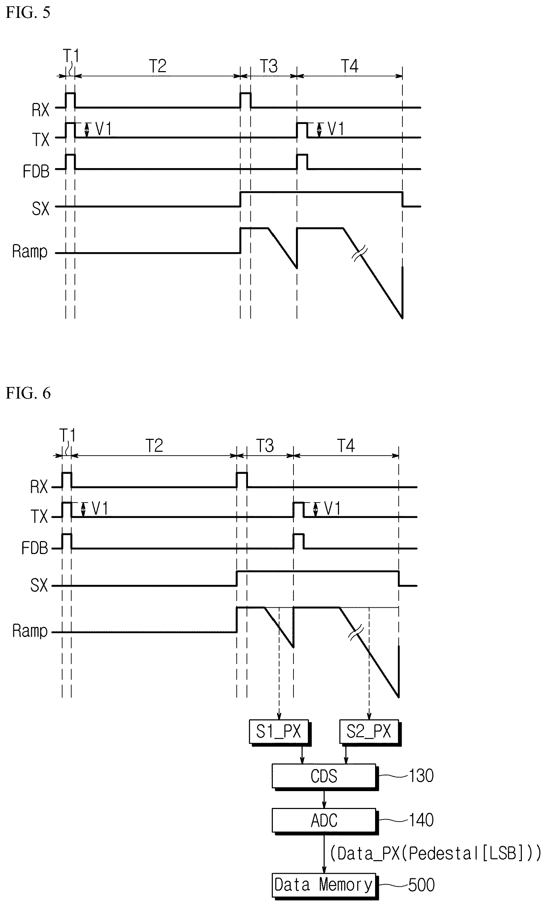

FIG. 5 is a timing diagram of a pixel based on an embodiment.

Hereinafter, for convenience of description, a reset period will be referred to as a first period T1, a light irradiation period will be referred to as a second period T2, a read period will be referred to as a third period T3 and a fourth period T4, and the third period T3 may be an FD reset period, and the fourth period T4 may be a read-out period. The first period T1 may be a PD-reset period.

A voltage applied to the gate electrode of the transmission transistor TT may be the first voltage V1, and activation/inactivation of the transmission transistor TT may be effectuated based on a magnitude of the first voltage V1. The optimal voltage value may need to be applied to the gate electrode of the transmission transistor TT to ensure proper operation. The optimal voltage value for turning on the transmission transistor TT may vary for each individual pixel of FIG. 2. For example, the first voltage V1 may be the optimal voltage value of one pixel PX, a voltage greater than the first voltage V1 may be the optimal voltage value of another pixel PX, and a voltage smaller than the first voltage V1 may be the optimal voltage value of still another pixel PX.

In the case of one pixel PX (or the first pixel), the optimal voltage value greater than the first voltage (e.g., V1 in FIG. 5) can be applied to the transmission transistor to ensure proper operation, and the compensation signal V1' in FIG. 4 (or the supplementary first voltage) may be greater than the first voltage V1.

In the case of another pixel PX (or a second pixel), an optimal voltage value for the transmission transistor can be smaller than the first voltage (e.g., V1 in FIG. 5), and the compensation signal V1' in FIG. 4 (or the supplementary first voltage) may be smaller than the first voltage V1. However, in some embodiments, when the diodes OD1 and OD2 in FIG. 4 are configured to be turned on only when a higher voltage is applied, the first voltage V1 of FIG. 5 may be the lowest voltage value among the optimal voltage values of all the pixels PX. Therefore, in some embodiments, in the case of the second pixel, the compensation signal V1' may have the same magnitude as the first voltage V1. That is, the first voltage V1 may be the optimal voltage value in the second pixel.

In the case of still another pixel PX (or a third pixel), the first voltage (e.g., V1 in FIG. 5) applied to the transmission transistor TT and the optimal voltage value may be the same. That is, the compensation signal V1' in FIG. 4 (or the supplementary first voltage) may be the same as the first voltage V1.

FIG. 6 is a diagram illustrating storing image data output from one pixel based on an embodiment. FIG. 6 shows storing image data output from each of the above-described first to third pixels. Further, FIG. 6 shows transferring pixel signals S1_PX and S2_PX extracted (or generated) from the third period T3 and the fourth period T4 to the CDS 130.

Referring to FIG. 6, in the third period T3, the first pixel signal S1_PX may be output to the output signal line, and in the fourth period T4, the second pixel signal S2_PX may be output to the output signal line. The pixel signals S1_PX and S2_PX are transferred to the CDS 130. For example, the first pixel signal S1_PX may refer to a pixel signal with respect to the photocharge when the floating diffusion region is reset, and the second pixel signal S2_PX may refer to a pixel signal with respect to the photocharge accumulated in the floating diffusion region. The operation of storing the pixel signals S1_PX and S2_PX, obtained during the third period T3 and the fourth period T4 in the data memory 500 as illustrated in FIG. 6 may be performed during a wafer test operation.

In addition, the generation of the pixel signals S1_PX and S2_PX may be performed under a white environment. However, the present embodiments are not limited thereto, and the generation of the pixel signals S1_PX and S2_PX conducted in a black environment. When the generation of the pixel signals S1_PX and S2_PX is performed in the black environment without presence of incident light to the pixel array, there may be no photocharge caused by the incident light that is accumulated in a photodetector PD during the second period T2.

For example, when the optimal voltage is applied to the transmission transistor TT in the case of the third pixel described above, the first pixel signal S1_PX may have a first voltage value, the second pixel signal S2_PX may have a second voltage value, and a gap between the first voltage value and the second voltage value may correspond to the amount of photocharge applied to the photodetector PD. The CDS 130 may calculate a gap between the pixel signals S1_PX and S2_PX and transfer it to the ADC 140. Therefore, the ADC 140 may perform digital conversion and offset processing by receiving a value (hereinafter, a normal value) corresponding to the amount of photocharge applied to the photodetector PD. For example, the ADC 140 may generate image data Data_PX(Pedestal[LSB]) by converting the normal value received from the CDS 130 into a digital format and applying offset to the normal value, and a value of the image data may be 64[LSB]. That is, for example, the normal value is assumed to be 64[LSB].

However, in the case of the first pixel, when a voltage smaller than the optimal voltage is applied to the transmission transistor TT, the first pixel signal S1_PX may be the first voltage value, and the second pixel signal S2_PX may have a voltage greater than the second voltage value. Therefore, the ADC 140 may receive a voltage value greater than the normal value (hereinafter, a first abnormal value) and perform digital conversion and offset processing on the received voltage value. For example, the ADC 140 may convert the first abnormal value received from the CDS 130 into a digital format and offset it, generate the image data Data_PX(Pedestal[LSB]), and a value thereof may be a value greater than 64[LSB].

In addition, in the case of the second pixel, when a voltage greater than the optimal voltage is applied to the transmission transistor TT, the first pixel signal S1_PX may be the first voltage value, and the second pixel signal S2_PX may have a voltage smaller than the second voltage value. Therefore, the ADC 140 may receive a voltage value smaller than the normal value (hereinafter, a second abnormal value) and conduct digital conversion and offset processing on the received voltage value. For example, the ADC 140 may convert the second abnormal value received from the CDS 130 into a digital format and offset it, generate the image data Data_PX(Pedestal[LSB]), and a value thereof may be a value smaller than 64[LSB].

In an embodiment, as described above, a size of the image data Data_PX generated from each pixel PX may vary depending on whether the transmission control signal applied to the transmission transistor TT of a specific pixel is the optimal voltage, whether it is smaller than the optimal voltage, or whether it is greater than the optimal voltage, , and the image data Data_PX generated per pixel may be stored in the data memory 500. The data memory 500 may store the image data Data_PX to correspond to the pixels PX per coordinate. In some embodiments, instead of storing the image data Data_PX per coordinate of the pixels PX, the data memory 500 may store position information identifying the pixels requiring correction based on the image data Data_PX generated per coordinate, or values to be corrected for the pixels PX requiring correction.

In addition, when the optimal voltage is not applied to the transmission transistor TT per pixel PX (e.g., when a value of the image data Data_PX of 64[LSB] is not generated), the first period T1 to the fourth period T4 in FIG. 5 may be repeated while changing a value of the transmission control signal in the wafer test WT operation. By doing so, the optimal voltage value of the transmission control signal per pixel PX may be measured. Therefore, both the image data Data_PX corresponding to the pixels PX per coordinate, and the optimal voltage value of the transmission control signal of the pixel PX per coordinate may be stored in the data memory 500. The optimal voltage value of the transmission control signal of the pixel PX per coordinate may be different from one another. For example, when the optimal voltage value of the transmission transistor TT of a pixel PX of which the image data Data_PX is 64[LSB] is a reference voltage value, the optimal voltage value of the transmission transistor TT of a pixel PX of which the image data Data_PX is greater than 64[LSB] may be greater than the reference voltage value, and the optimal voltage value of the transmission transistor TT of a pixel PX of which the image data Data_PX is smaller than 64[LSB] may be smaller than the reference voltage value.

Accordingly, the compensation signal applied to the third pixel (e.g., V1' in FIG. 6) may be the same as the first voltage (e.g., V1 in FIG. 6), and the compensation voltage applied to the first pixel (e.g., V1' in FIG. 6) may be greater than the first voltage (e.g., V1 in FIG. 6), and the compensation signal applied to the second pixel (e.g., V1' in FIG. 6) may be smaller than the first voltage (e.g., V1 in FIG. 6). Therefore, the compensation signal supplied to the compensation line CPL can be used to adjust, at each coordinate of the pixel array, an effective gate voltage of the transmission transistor of a pixel.

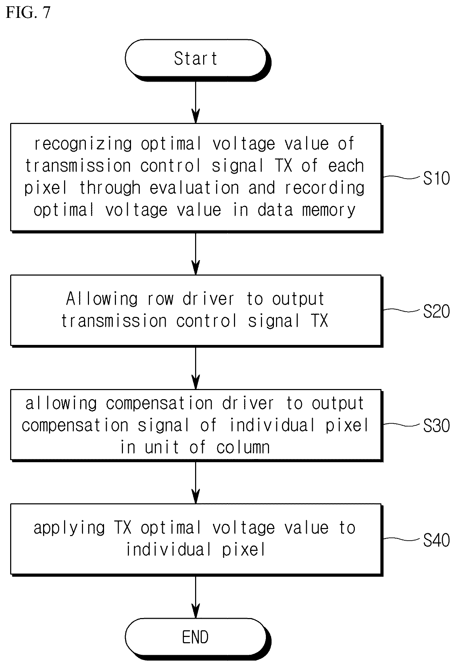

Hereinafter, a method for operating the imaging device will be described with reference to FIGS. 1 to 6. While describing the flow diagram in FIG. 7, FIGS. 1 to 6 may also be referred to.

FIG. 7 is a flow diagram illustrating the method for operating the imaging device based on an embodiment.

Referring to FIGS. 6 and 7, the method for operating the imaging device based on an embodiment includes evaluating an optimal voltage value of the transmission control signal TX of each pixel and storing the optimal voltage value in the data memory 500 (S10). In the present operation, such an evaluation may be formed under the black environment or under the white environment. An example embodiment will be described based on the white environment evaluation. When evaluating an optimal voltage value of the transmission control signal TX of each pixel and storing the optimal voltage value in the data memory 500 (S10), an operation of storing the image pixels S1_PX and S2_PX in the data memory 500 may be performed during the wafer test operation, and the CDS 130 may calculate the gap between the pixel signals S1_PX and S2_PX transferred to the individual pixel and provide the calculated gap to the ADC 140. Therefore, the ADC 140 may receive a value corresponding to the amount of photocharge applied to the photodetector PD (hereinafter, normal value), and perform the digital conversion and offset processing. In an embodiment, as described above, the size of the image data Data_PX generated from each pixel PX may vary depending on whether the transmission control signal applied to the transmission transistor TT is the optimal voltage, whether it is smaller than the optimal voltage, or whether it is greater than the optimal voltage, and the image data Data_PX generated per pixel may be stored in the data memory 500. The data memory 500 may store the image data Data_PX in correspondence with the coordinate of each of the pixels PX. In some embodiments, instead of storing the image data Data_PX per coordinate of the pixels PX, the data memory 500 may store position information identifying the pixels requiring correction based on the image data Data_PX generated per coordinate, or values to be corrected for the pixels PX requiring correction.

Then, the method for operating the imaging device based on an embodiment includes outputting, from a row driver (e.g., 120 in FIG. 2), the transmission control signal TX of the pixel in a unit of a row (S20). For example, the transmission control signal (the first voltage V1 in FIG. 4) provided to the pixel on a row basis may be an average optimal voltage value, or a minimum optimal voltage value of the pixels obtained on a row basis. However, the disclosed technology is not limited thereto.

Then, the method for operating the imaging device based on an embodiment includes outputting, from the compensation driver (e.g., 180 in FIG. 2), a compensation signal (e.g., V1' in FIG. 4) of an individual pixel on a column basis (S30). In the operation S10, the compensation signal V1' is the one calculated per individual pixel (or a pixel requiring correction), and may vary depending on the pixels.

Then, the method for operating the imaging device based on an embodiment includes applying an optimal voltage value to the individual pixel (S40). As described referring to FIG. 4, the compensation signal (or the supplementary first voltage V1' ) may be applied to a terminal of the second diode OD2 through the compensation line CPL.

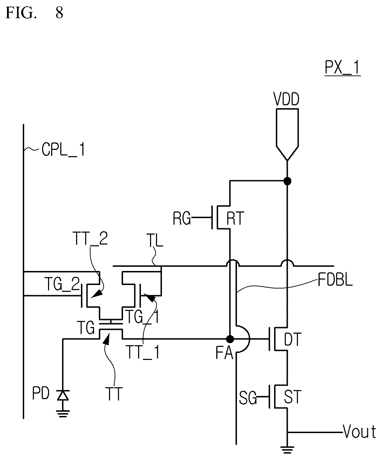

FIG. 8 is a circuit diagram of a pixel array based on another embodiment.

Referring to FIG. 8, the pixel array based on another embodiment may further include a compensation line CPL_1, and the compensation line CPL_1 may be electrically connected to a gate electrode TG_2 of a compensation transistor TT_2 of a pixel PX_1. A transmission signal line TL may be electrically connected to a gate electrode TG_1 and a first electrode of an auxiliary transmission transistor TT_1. Each of a second electrode of the compensation transistor TT_2 and a second electrode of the auxiliary transmission transistor TT_1 may be electrically connected to the gate electrode TG of the transmission transistor TT, and the second electrode of the transmission transistor TT may be electrically connected to the floating diffusion region FA. The gate electrode TG_2 and a first electrode of the compensation transistor TT_2 may be electrically connected to the compensation line CPL_1.

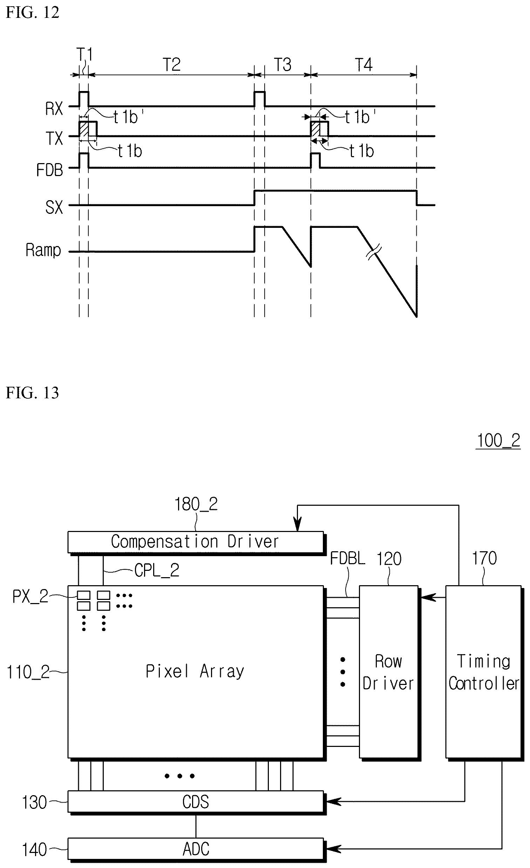

An auxiliary transmission control signal may be applied to the gate electrode TG_1 of the auxiliary transmission transistor TT_1 through the transmission signal line TL, and the compensation signal may be applied to the gate electrode TG_2 of the compensation transistor TT_2 through the compensation line CPL_2. For example, the auxiliary transmission control signal may be the lowest voltage value among the optimal voltage values of the pixels PX_1 per coordinate (or the lowest voltage value among the optimal voltage values of the pixels PX_1 per pixel row, or an average optimal voltage value of the pixels PX_1 per pixel row), and the compensation signal may be the optimal voltage value of the pixels PX per coordinate. For example, in the case of the pixel PX_1 of which the image data Data_PX described referring to FIG. 12 is 64[LSB], a magnitude of the auxiliary transmission control signal and a size of the compensation signal may be the same, in the case of the pixel PX_1 of which the image data Data_PX is greater than 64[LSB], the magnitude of the compensation signal may be greater than the magnitude of the auxiliary transmission control signal, and in the case of the pixel PX_1 of which the image data Data_PX is smaller than 64[LSB], the magnitude of the auxiliary transmission control signal may be greater than the magnitude of the compensation signal.

As a result, the transmission signal applied to the transmission transistor TT of each of the pixels PX_1 having the optimal voltage value different from one another may be optimized through the compensation transistor TT_2 and the compensation line CPL_2.

The related description has already been provided referring to FIG. 3, and thus, a further detailed description thereof will be omitted.

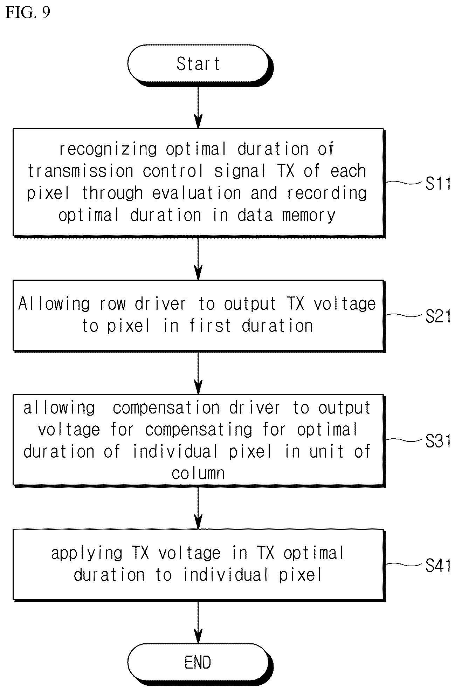

Hereinafter, referring to FIGS. 9 to 12, a method for compensating a duration of the transmission control signal TX, and an imaging device compensating the same will be described.

FIG. 9 is a flow diagram illustrating a method for operating an imaging device based on another embodiment. In the method for operating an imaging device and the imaging device based on FIG. 9, the compensation signal is applied through the compensation line CPL described in FIG. 2. Although the magnitude of the compensation signal is the same as the magnitude of the first voltage V1 in FIG. 4, the duration of the compensation signal may be different from that of the transmission control signal TX to compensate for the duration of the transmission control signal TX. Therefore, the structure of the imaging device based on an embodiment may be the same as that of the imaging device described referring to FIG. 2, 4, or 8.

The method for operating an imaging device based on an embodiment includes evaluating an optimal duration of the transmission control signal TX of each pixel and storing the optimal duration in the data memory 500 (S11). In the present operation, the evaluation may be performed under the black environment or under the white environment. An example embodiment will be described based on the white environment evaluation. The operation S11 is similar to the operation S10 described referring to FIG. 7, therefore, the redundant description will be omitted.

Then, the method for operating the imaging device based on an embodiment includes outputting, from the row driver (e.g. 120 in FIG. 2), the transmission control signal TX to the pixel during a first duration (S21). For example, the first duration of the transmission control signal (the first voltage in FIG. 4) provided to the pixels on a row basis may be an average optimal duration or a minimum optimal duration of the pixels obtained on a row basis, the disclosed technology is not limited thereto.

The method for operating the imaging device based on an embodiment includes outputting, from the compensation driver (e.g. 180 in FIG. 2), a voltage (or a compensation signal) for compensating for the optimal duration of an individual pixel on a column basis (S31). In an embodiment, the compensation signal may be the equal to the first voltage the disclosed technology is not limited thereto.

Then, the method for operating the imaging device based on an embodiment includes applying a TX voltage during a TX optimal duration to the individual pixel (S41).

In an embodiment, the optimal duration of the transmission control signal TX per pixel may be different from one another, and the optimal duration of the transmission control signal TX applied to the individual pixel may be optimized through the duration of the compensation signal output from compensation driver 180.

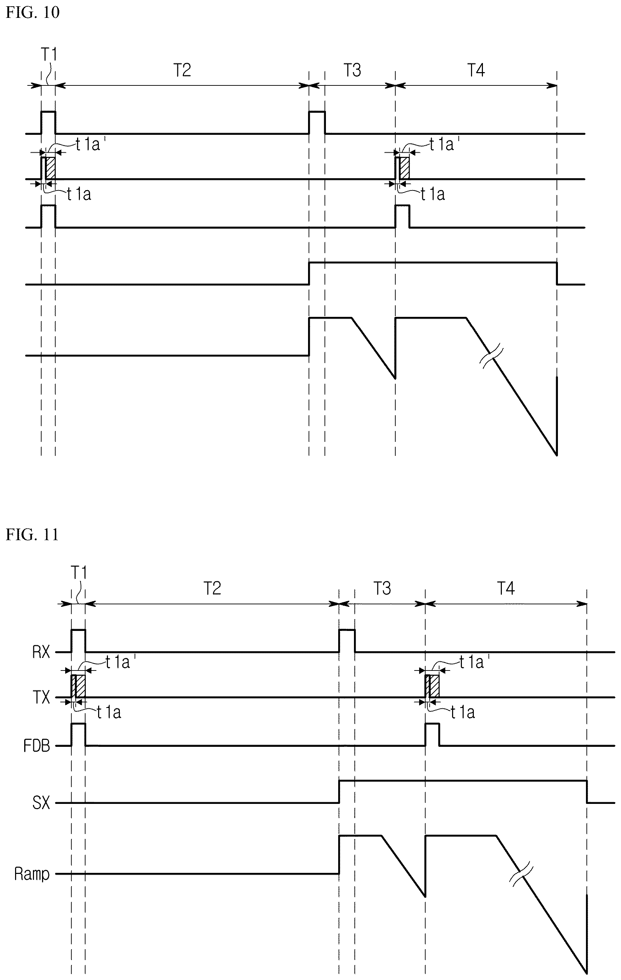

FIG. 10 is a timing diagram illustrating an operation of a transmission transistor of a pixel based on another embodiment in an optimal driving time.

Referring to FIG. 10, in the first period T1, the transmission control signal TX may be applied to the gate electrode during a first duration t1a, and after the transmission control signal TX is applied, the compensation signal may be applied to the gate electrode during a first compensation duration tla'. A sum of the first duration t1a and the first compensation duration tla' may be the same as a length of the first period T1. The first duration t1a and the first compensation duration tla' may not overlap each other.

FIG. 11 is a timing diagram illustrating an operation of a transmission transistor of a pixel based on another embodiment in an optimal driving time.

Referring to FIG. 11, in a pixel array based on another embodiment, during the first period T1, the transmission control signal TX may be applied to the gate electrode during a first duration t1a, and at the same time, the compensation signal may be applied to the gate electrode during a first compensation duration t1a', which may be equal in length to the first period T1.

FIG. 12 is a timing diagram illustrating an operation of a transmission transistor of a pixel based on another embodiment in an optimal driving time.

Referring to FIG. 12, during the first period T1, the transmission control signal TX may be applied to the gate electrode during a first duration t1b, and the first duration t1b may be longer than a length (or a time) of the first period T1. In this case, the compensation signal may be applied to the gate electrode TG_2 of the compensation transistor TT_2, by applying a voltage (or a compensation signal) higher than the transmission signal line TL to the compensation line in FIG. 3, or turning off the transmission transistor TT in FIG. 8 and turning on the compensation transistor TT_2 only. The compensation signal may be applied to the gate electrode in the first compensation duration t1b' having the same time as that of the first period T1.

Hereinafter, the imaging device configured to optimize a boosting control signal FDB will be described with reference to FIGS. 13 to 16.

FIG. 13 is a block diagram illustrating an image sensing unit based on another embodiment.

Referring to FIG. 13, the image sensing unit 100_2 based on an embodiment may include a compensation driver 180_2. The compensation driver 180_2 may be controlled by the timing controller 170. A compensation line CPL_2 may extend from the compensation driver 180_2. The compensation line CPL_2 may be provided in plural number, extend along a column direction, and the plurality of compensation lines CPL_2 may be spaced apart from each other in a row direction. Each of the plurality of compensation lines CPL_2 may correspond to each of the pixel columns configured of the plurality of pixels PX_2 extending in the column direction one to one. In an embodiment, the control line may be the boosting control line FDBL.

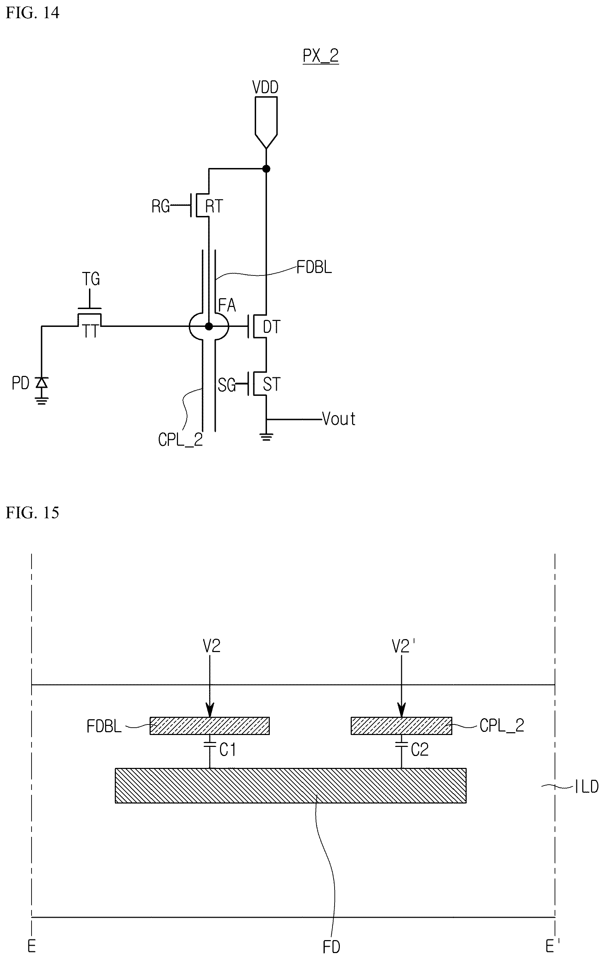

FIG. 14 is a circuit diagram of a pixel array based on another embodiment.

Referring to FIG. 14, the pixel array 110_2 based on the present embodiment may further include a compensation line CPL_2. The compensation line CPL_2 may form a capacitance with the floating diffusion region FA. The compensation line CPL_2 may serve to compensate for a capacitance formed between the boosting control line FDBL and the floating diffusion region FA. The compensation line CPL_2 may provide a compensation signal to the floating diffusion region FA. The compensation signal may be a compensation signal with respect to the boosting control signal.

FIG. 15 is a schematic cross-sectional view illustrating a floating diffusion electrode, a boosting control line and a compensation line of the image sensing unit of FIG. 14.

Referring to FIG. 15, the compensation line CPL_2 may overlap a floating diffusion electrode FD.

The boosting control line FDBL may form a first capacitance C1 with the floating diffusion electrode FD, and the compensation line CPL_2 may form a second capacitance C2 with the floating diffusion electrode FD.

The boosting control signal (or the second voltage V2) may be applied to the boosting control line FDBL, and the compensation signal (or the second voltage V2') may be applied to the compensation line CPL_2. For example, the second voltage V2' may be the lowest voltage value among the optimal voltage values of the pixels PX per coordinate (or the lowest voltage value among the optimal voltage values of the pixels PX per pixel row, or an average optimal voltage value of the pixels P1 per pixel row), and the second voltage V2' may be a voltage value which is the same as a gap between the second voltages V2 among the optimal voltage values of the pixels PX per coordinate.

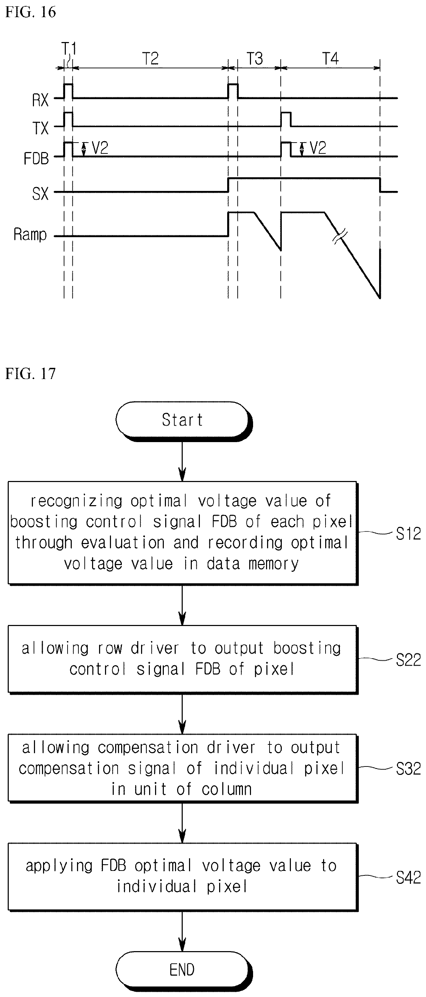

FIG. 16 is a timing diagram of one pixel.

Referring to FIG. 16, in the first period T1 and the fourth period T4 of the pixel based on an embodiment, the boosting control signal FDB may have the second voltage V2.

In the case of one pixel (or a first pixel), an optimal voltage value having a voltage value higher than the second voltage (e.g. V2 in FIG. 15) must be applied to the boosting control line FDBL for proper operation, and a sum of the compensation signal (e.g. V2' in FIG. 15)(or the second voltage) and the second voltage V2 may be the optimal voltage value.

Hereinafter, the method for operating the imaging device will be described with reference to FIGS. 14 to 16. While describing the flow diagram of FIG. 17, FIGS. 14 to 16 may also be referred to.

FIG. 17 is a flow diagram illustrating a method for operating an imaging device based on another embodiment.

Referring to FIGS. 6 and 17, the method for operating the imaging device based on an embodiment includes evaluating an optimal voltage value of the boosting control signal FDB of each pixel and storing the optimal voltage value in the data memory 500 (S12). In the present operation, the evaluation may be performed under the black environment or under the white environment. An example embodiment will be described based on the white environment evaluation. During the evaluation operation of the optimal voltage value of the boosting control signal FDB of each pixel and the storing operation of the optimal voltage value in the data memory 500 (S12), an operation of storing the pixel signal (e.g. S1_PX and S2_PX in FIG. 6) in the data memory 500 may be performed during the wafer test operation, and the CDS 130 may calculate the gap between the pixel signals S1_PX and S2_PX transferred to an individual pixel and provide the calculated gap to the ADC 140. Therefore, the ADC 140 may receive a value corresponding to the amount of photocharge applied to the photodetector PD (hereinafter, the normal value), and perform the digital conversion and offset processing. In an embodiment, as described above, the size of the image data Data_PX generated from each pixel PX may vary depending on whether the boosting control signal applied to the boosting control line FDBL is the optimal voltage, whether it is smaller than the optimal voltage, or whether it is greater than the optimal voltage, and the image data Data_PX generated per pixel may be stored in the data memory 500. The data memory 500 may store the image data Data_PX in accordance with the coordinate of each of the pixels PX. In some embodiments, instead of storing the image data Data_PX per coordinate of the pixels PX, the data memory 500 may store position information identifying the pixels requiring correction based on the image data Data_PX generated per coordinate, or values to be corrected for the pixels PX requiring correction.

Then, the method for operating the imaging device based on an embodiment includes allowing the row driver (e.g. 120 in FIG. 13) to output the boosting control signal FDB of the pixel (S22). For example, the boosting control signal FDB may be provided in a unit of a row, and the boosting control signal FDB provided to the pixels in a unit of a row (the second voltage V2 in FIG. 15) may be an average optimal voltage value, or a minimum optimal voltage value of the pixels in a unit of a row, however, the embodiments of the disclosed technology are not limited thereto.

Then, the method for operating the imaging device based on an embodiment includes allowing the compensation driver (e.g. 180_2 in FIG. 13) to output a compensation signal (e.g. V2' in FIG. 15) of an individual pixel in a unit of a column (S32). In the operation S12, the compensation signal V2' is the one calculated per individual pixel (or a pixel requiring correction), and may be different per individual pixel.

Then, the method for operating the imaging device based on an embodiment includes applying an FDB optimal voltage value to the individual pixel (S42). As described referring to FIG. 15, the compensation signal V2' may be applied through the compensation line CPL_2.

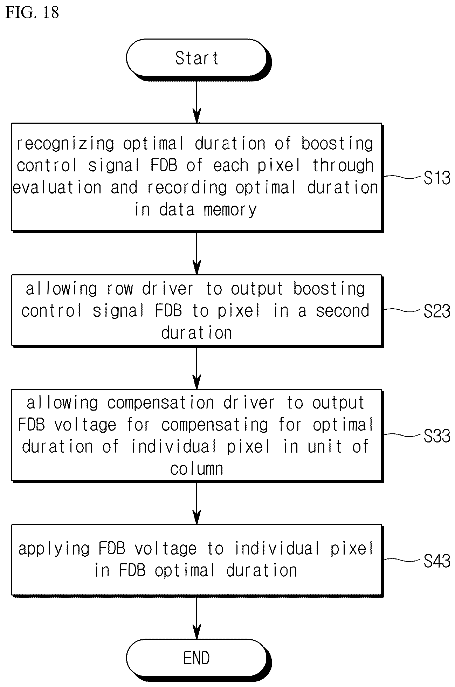

Hereinafter, referring to FIGS. 18 to 20, a method for compensating a duration of the boosting control signal FDB, and an imaging device compensating the same will be described.

FIG. 18 is a flow diagram illustrating a method for operating an imaging device based on another embodiment. In the method for operating an imaging device and the imaging device based on FIG. 18, the compensation signal is applied through the compensation line CPL described in FIG. 13; however, the magnitude of the compensation signal may be the same as the magnitude of the second voltage V2 in FIG. 15. However, the duration of the compensation signal may be different from that of the boosting control signal FDB to compensate for the duration of the boosting control signal FDB. Therefore, the structure of the imaging device based on an embodiment may be the same as that of the imaging device described referring to FIG. 15.

The method for operating an imaging device based on an embodiment includes evaluating the optimal duration of the boosting control signal FDB of each pixel and storing the optimal duration in the data memory 500 (S13). In the present operation, the evaluation may be performed under the black environment or under the white environment. An example embodiment will be described based on the white environment evaluation. The operation S13 is similar to the operation S10 described referring to FIG. 7, therefore, the redundant description will be omitted.

The method for operating the imaging device based on an embodiment includes outputting, from the row driver (e.g. 120 in FIG. 13), the boosting control signal FDB to the pixel in a second duration (S23). For example, the second duration of the boosting control signal FDB provided to the pixels on a row basis (the second voltage V2 in FIG. 15) may be an average optimal duration, or a minimum duration of the pixels obtained on a row basis, but the disclosed technology is not limited thereto.

Then, the method for operating the imaging device based on an embodiment includes outputting, from the compensation driver (e.g. 180_2 in FIG. 13), a voltage (or the compensation signal) for compensating for the optimal duration of an individual pixel on a column basis (S33). In an embodiment, the compensation signal may be the same as the second voltage, but the disclosed technology is not limited thereto.

The method for operating the imaging device based on an embodiment includes applying an FDB voltage to an individual pixel during an FDB optimal duration (S43).

In an embodiment, the optimal duration of the boosting control signal FDB per pixel may be different from one another, and the optimal duration of the boosting control signal FDB applied to the individual pixel may be optimized through the duration of the compensation signal output from compensation driver 180_2.

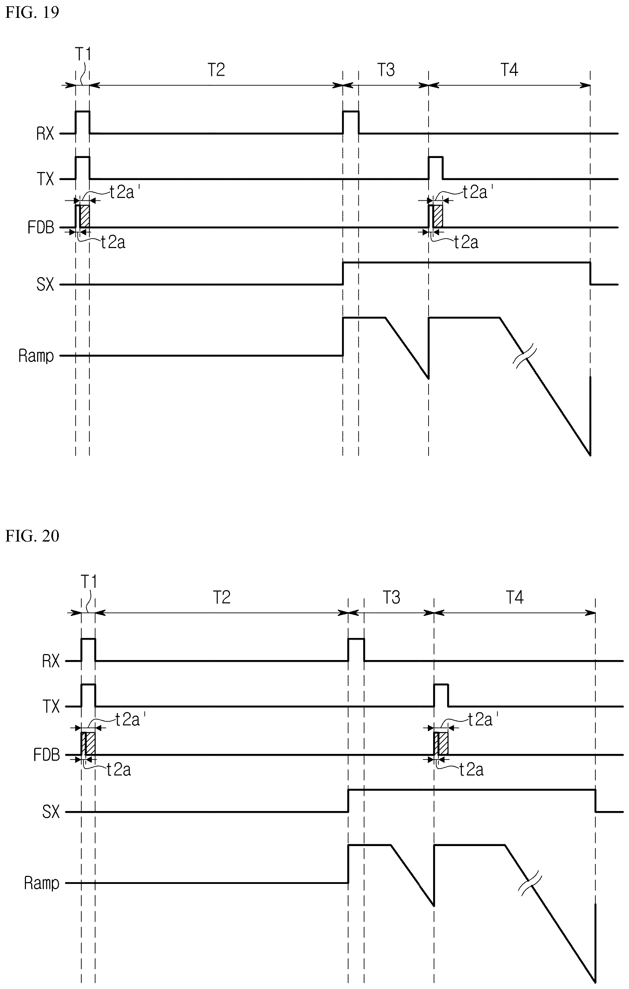

FIG. 19 is a timing diagram illustrating an operation of the boosting control line of a pixel based on another embodiment in an optimal driving time.

Referring to FIG. 19, during the first period T1, the boosting control signal FDB may be applied during a second duration t2a, and after the boosting control signal FDB is applied, the compensation signal may be applied during a second compensation duration t2a'. The sum of the second duration t2a and the second compensation duration t2a' may be the same as a length of the first period T1. The second duration t2a and the second compensation duration t2a' may not overlap each other.

FIG. 20 is a timing diagram illustrating an operation of the boosting control line of a pixel based on another embodiment in an optimal driving time.

Referring to FIG. 20, during the first period T1, the boosting control signal FDB may be applied during the second duration t2a, and at the same time, the compensation signal may be applied during the second compensation duration t2a', which may be equal in length to the first period T1.

Only a few implementations and examples of the disclosed technology are described and other implementations, enhancements and variations can be made based on what is described and illustrated in this patent document.

## Claims

1. An imaging device, comprising:
a pixel array including a plurality of pixels, each pixel configured to convert incident light into photocharge and including a transmission transistor configured to transmit the photocharge;
a row driver electrically coupled to the pixel array and configured to supply a control signal to the plurality of pixels; and
a compensation driver electrically coupled to the pixel array and configured to supply a compensation signal to the plurality of pixels to adjust, at each coordinate of the pixel array, an effective signal of the transmission transistor.

2. The imaging device of claim 1,
wherein the control signal has a first voltage and a first duration, the compensation signal has a second voltage and a second duration, and the effective signal has an effective gate voltage an effective signal duration.

3. The imaging device of claim 1 or 2,
wherein each of the plurality of pixels includes a photodetector, and a floating diffusion region electrically connected to the transmission transistor, wherein the transmission transistor is electrically connected to the photodetector, and
wherein the pixel array further includes a boosting control line configured to form a first capacitance with the floating diffusion region of each of the plurality of pixels.

4. The imaging device of any of claims 1-3,
wherein both the control signal and the compensation signal are applied to a gate electrode of the transmission transistor.

5. The imaging device of claim 3,
wherein the pixel array further includes:
a transmission line electrically connected to the row driver;
a first diode electrically connected between the transmission line and the gate electrode of the transmission transistor;
a compensation line electrically connected to the compensation driver; and
a second diode electrically connected between the compensation line and a gate electrode of the transmission transistor.

6. The imaging device of claim 3,
wherein the pixel array further includes:
a transmission line electrically connected to the row driver;
a compensation transistor electrically connected to the transmission transistor; and
a compensation line configured to electrically connect the compensation driver to a gate electrode of the transmission transistor.

7. The imaging device of claim 3,
wherein each of the plurality of pixels further includes:
a compensation line configured to form a second capacitance with the floating diffusion region.

8. The imaging device of claim 7,
wherein the control signal is provided to the boosting control line, and the compensation signal is provided to the compensation line.

9. The imaging device of claim 1,
wherein an optimal voltage value of the control signal of one pixel among the plurality of pixels and an optimal voltage value of the control signal of another pixel among the plurality of pixels are different from each other.

10. The imaging device of claim 1,
wherein an optimal duration of the control signal of one pixel among the plurality of pixels and an optimal duration of the control signal of another pixel among the plurality of pixels are different from each other.

11. The imaging device of claim 9 or 10,
wherein the control signal is applied to the gate electrode of the transmission transistor or the boosting control line.

12. A method for operating an imaging device, comprising:
evaluating at least one of an optimal voltage value and an optimal duration of a control signal of each of a plurality of pixels in a pixel array and storing the optimal voltage value or the optimal duration in a data memory;
outputting the control signal from a row driver;
outputting a compensation signal corresponding to the optimal voltage or the optimal duration for each of the plurality of pixels on a column basis; and
applying the control signal and the compensation signal to each of the plurality of pixels.

13. The method for operating an imaging device of claim 12,
wherein each of the plurality of pixels includes a photodetector, a transmission transistor electrically connected to the photodetector, and a floating diffusion region electrically connected to the transmission transistor, and
wherein the pixel array further includes a boosting control line configured to form a first capacitance with the floating diffusion region of the pixel.

14. The method for operating an imaging device of claim 13,
wherein both the control signal and the compensation signal are applied to a gate electrode of the transmission transistor.

15. The method for operating an imaging device of claim 12,
wherein storing the optimal voltage value or the optimal duration in the data memory includes storing information identifying pixels that require correction, or values to be corrected with respect to the pixels based on a pixel signal obtained during a reset period of a floating diffusion region and a difference between pixel signals obtained during a read-out period, and
wherein the information identifying pixels requiring correction or the values to be corrected with respect to the pixels are stored in the data memory.
